# EUROPÄISCHE PATENTSCHRIFT

(11) **EP 3 601 014 B1**
(45) Veröffentlichungstag und Bekanntmachung des Hinweises auf die Patenterteilung: **26.01.2022**
(21) Anmeldenummer: 18716168.2
(22) Anmeldetag: 28.03.2018
(51) Int. Cl.: B62D 1/19, B62D 1/189

(54) **LENKSÄULE MIT ENERGIEABSORPTIONSVORRICHTUNG**
STEERING COLUMN HAVING AN ENERGY ABSORPTION DEVICE
COLONNE DE DIRECTION AVEC DISPOSITIF ABSORBEUR D'ÉNERGIE

(30) Priorität: 31.03.2017 DE 102017107034
(43) Veröffentlichungstag der Anmeldung: 05.02.2020
(73) Patentinhaber: thyssenkrupp Presta AG, 9492 Eschen (LI); thyssenkrupp AG, 45143 Essen (DE)
(72) Erfinder: DOMIG, Markus, 6781 Bartholomäberg (AT)
(74) Vertreter: thyssenkrupp Intellectual Property GmbH
(86) Internationale Anmeldenummer: PCT/EP2018/057954
(87) Internationale Veröffentlichungsnummer: WO 2018/178168

(56) Entgegenhaltungen:
- WO-A1-2018/073305
- US-A1- 2015 239 490
- US-A1- 2016 368 524

## Beschreibung

Die Erfindung betrifft eine Lenksäule für ein Kraftfahrzeug, mit einem inneren Mantelrohr, das eine Lenkwelle drehbar lagert, und einer äußeren Manteleinheit, in der das innere Mantelrohr in Axialrichtung verschiebbar aufgenommen und fixierbar ist, mit einer wirkungsmäßig zwischen dem Mantelrohr und der Manteleinheit angeordneten Energieabsorptionsvorrichtung, in der ein Teil der im Crashfall auftretenden Energie absorbierbar ist, wenn das Mantelrohr gegenüber der Manteleinheit teleskopisch verschoben wird, wobei die Energieabsorptionsvorrichtung mindestens einen Deformationsstreifen aufweist, der durch ein Bremselement gezogen und dabei deformiert wird.

Aus der DE 10 2011 015 140 A1 ist eine derartige Lenksäule mit Energieabsorptionsvorrichtung bekannt, bei der ein Deformationsstreifen auf dem inneren Mantelrohr angeordnet ist. Zur Bereitstellung eines ausreichenden Weges der teleskopischen Verschiebung muss der Deformationsstreifen lang genug sein. Daraus folgt ein bezüglich der Länge entsprechend dimensioniertes Mantelrohr, um den Deformationsstreifen daran zu befestigen. Nachteil dieser Lösung ist es, dass dadurch ein großer Bauraum für die Lenksäule erforderlich ist bzw. freigehalten werden muss, denn im Crashfall darf es zu keinerlei Kollisionen der einzelnen Bauteile kommen.

Aufgabe der Erfindung ist es, eine Lenksäule mit Energieabsorptionsvorrichtung anzugeben, die gleichzeitig eine kompakte Bauweise aufweist und im Crashfall über einen großen Weg telekopierbar ist.

Die Aufgabe wird durch die Merkmale des Patentanspruchs 1 gelöst. Vorteilhafte Ausgestaltungsformen sind in den Unteransprüchen beschrieben.

Erfindungsgemäß ist der Deformationsstreifen auf einer Trägerplatte befestigt, die ihrerseits am Mantelrohr befestigt ist.

Bevorzugt ragt die Trägerplatte in Axialrichtung über das Mantelrohr hinaus. Durch diese Maßnahme kann der Deformationsstreifen über das Ende des Mantelrohrs hinaus verlängert werden, ohne dass das Mantelrohr selbst länger sein müsste. Mit einem kürzeren inneren Mantelrohr kann die äußere Manteleinheit und damit die gesamte Lenksäule in Axialrichtung kürzer und kompakter ausgestaltet werden. Dennoch steht ein längerer Deformationsweg auf dem Deformationsstreifen zur Verfügung.

Insbesondere wenn die Konstruktion der äußeren Manteleinheit ein beliebig weites Hineinschieben des Mantelrohrs in die Manteleinheit verhindert, ist die Erfindung vorteilhaft anwendbar. In diesem Fall wird eine Ausführungsform empfohlen, bei der der über das Mantelrohr hinaus ragende Abschnitt der Trägerplatte mit dem Deformationsstreifen im Crashfall durch eine Öffnung der äußeren Manteleinheit axial hindurch geht. Bevorzugt ragt die Trägerplatte in Axialrichtung nach dem Crashfall über die äußere Manteleinheit hinaus. Für diese Ausführungsform braucht man mit Vorteil nur eine kleine Öffnung in der Manteleinheit, da der vorstehende Abschnitt der Trägerplatte mit dem Deformationsstreifen eine weit geringere Querschnittsfläche als das gesamte Mantelrohr aufweist.

In einer besonders vorteilhaften Ausführungsform ist vorgesehen, dass die genannte Öffnung radial außerhalb eines Lagers für die Lenkwelle angeordnet ist. Ein solches Lager verhindert die weitere axiale Verschiebung des Mantelrohrs in der Manteleinheit. Das Lager kann sowohl als Gleitlager als auch als Kugellager ausgebildet sein. Das Lager muss aber nicht über seinen gesamten Umfang mit der Manteleinheit in Kontakt sein. Es kann vorgesehen sein, dass das Lager in ein Adapter eingesetzt ist, wobei der Adapter wiederum in der Manteleinheit eingesetzt ist. Deshalb kann in dem Bereich des vorstehenden Abschnitts der Trägerplatte mit dem Deformationsstreifen eine Öffnung zwischen dem äußeren Rand des Gleitlagers bzw. des Kugellagers und dem Gehäuse der Manteleinheit vorgesehen sein.

In vorteilhaft einfacher Weise ist die Trägerplatte mittels Nietverbindungen am Mantelrohr befestigt.

Die Trägerplatte bietet den Vorteil, dass der Deformationsstreifen zu dem Mantelrohr in einem vorbestimmten Abstand gehalten ist, so dass ein Durchbiegen des Deformationsstreifen im Crashfall durch die Trägerplatte verhindert wird und somit ein Herausbewegen des Deformationsstreifens aus dem Bremselement vermieden werden kann. Dank der Trägerplatte kann auf konstruktive Maßnahmen, wie ein auf das Mantelrohr zugerichteter erhabener Steg in dem Deformationsstreifen, verzichtet werden.

Die Erfindung kann mit Vorteil auch bei Lenksäulen zum Einsatz kommen, bei denen an der Trägerplatte zwei Deformationsstreifen befestigt sind, die mit zwei Bremselementen zusammenwirken. Zwei Deformationsstreifen können im Crashfall mehr Energie aufnehmen als ein einzelner Deformationsstreifen.

In vorteilhafter Weiterbildung ist vorgesehen, dass die Deformationsstreifen übereinander liegend angeordnet sind, dass der obenauf liegende erste Deformationsstreifen schmaler ist als der darunter liegende zweite Deformationsstreifen, dass der erste Deformationsstreifen von einem engeren ersten Bremselement und der zweite Deformationsstreifen von einem breiteren zweiten Bremselement umgriffen und eingeklemmt ist. Unter dem obenauf liegende erste Deformationsstreifen ist der Deformationsstreifen gemeint, der radial am weitesten von dem Mantelrohr entfernt ist, wobei der darunter liegende zweite Deformationsstreifen zwischen dem ersten Deformationsstreifen und dem Mantelrohr angeordnet ist. Diese Bauweise für zwei Deformationsstreifen ist besonders kompakt, weil sie kaum mehr Bauraum beansprucht als eine Ausführungsform mit einem einzigen Deformationsstreifen.

Eine weitere vorteilhafte Ausgestaltung sieht vor, dass die Bremselemente über eine Zahnplatte mit der äußeren Manteleinheit verbunden oder gekoppelt sind, dass ein mit Zähnen versehenes Arretierelement mit der äußeren Manteleinheit über eine Zuspannvorrichtung verbunden ist, die das Arretierelement gegen die Zahnplatte drückt, um diese im Fahrbetrieb an der Manteleinheit unverrückbar zu fixieren, so dass eine Verschiebung des Mantelrohrs gegenüber der Manteleinheit im Crashfall nur unter Betätigung der Energieabsorptionsvorrichtung möglich ist. Die Zahnplatte umfasst eine Reihe von einzelnen Zähnen, die mit Zähnen des Arretierelements in Eingriff bringbar sind. Diese Ausführungsform ermöglicht die Längsverstellung der Lenksäule in Axialrichtung. Wenn die Zuspannvorrichtung geöffnet ist, kann die Zahnplatte zusammen mit dem Mantelrohr relativ zum Arretierelement und der Manteleinheit mit geringem Kraftaufwand axial verschoben werden. Ist die Zuspannvorrichtung arretiert, so ist eine relative Verschiebung zwischen dem Arretierelement und der Zahnplatte nicht mehr möglich. Derartige Zuspannvorrichtungen sind im Prinzip bekannt und können als Hubgetriebe beispielsweise Keil-, Nocken- oder Kippstift-Getriebe aufweisen, die eine Drehung eines Spannbolzens in einen Spannhub bzw. eine Spannkraft umsetzen. Alternativ zu einem Betätigungshebel kann die Zupannvorrichtung auch durch einen motorischen Antrieb betätigt werden. Eine Verschiebung des Mantelrohrs innerhalb der Manteleinheit kann dann nur noch im Crashfall mit sehr erheblichem Kraftaufwand erfolgen, wobei die Deformationsstreifen verformt werden und Energie aufnehmen.

Mit Vorteil kann das erste Bremselement mittels einer lösbaren Kupplung mit dem zweiten Bremselement und der Zahnplatte verbunden sein, wobei die Kupplung mittels eines pyrotechnischen Schalters lösbar ist, so dass im Crashfall nur das zweite Bremselement den zweiten Deformationsstreifen verformt. Wenn im Crashfall eine zentrale Steuereinheit unter Auswertung entsprechender Sensoren entscheidet, dass relativ wenig Energie in der Energieabsorptionsvorrichtung absorbiert werden soll, kann sie durch einen elektrischen Impuls den pyrotechnischen Schalter auslösen, der durch Zündung einer Treibladung innerhalb einer kürzesten Zeitspanne die genannte Kupplung zwischen den beiden Bremselementen löst, so dass das erste Bremselement in seiner Ruhestellung bleibt, während das zweite Bremselement über den zweiten Deformationsstreifen gezogen wird. Dabei wird nur im zweiten Deformationsstreifen Energie absorbiert.

Bevorzugt ist die Manteleinheit von einer Konsole gehaltert. Die Konsole ist mit dem Kraftfahrzeug fest verbindbar und umfasst bevorzugt zwei Seitenwangen, die sich parallel zueinander erstrecken, wobei die Manteleinheit zwischen den Seitenwangen aufgenommen ist. Dabei kann es vorgesehen sein, dass die Manteleinheit gegenüber der Konsole verschwenkbar ist. Durch die Verschwenkbarkeit der Manteleinheit und das darin aufgenommenen inneren Mantelrohrs gegenüber der Konsole wird eine Höhenverstellung bereitgestellt.

Bevorzugt ist die Trägerplatte als flacher Streifen ausgebildet. Die Trägerplatte kann als Stanz-Biege-Blechbauteil gebildet sein. Dies bietet den Vorteil einer einfachen und kostengünsitgen Herstellung der Trägerplatte.

Zwei Ausführungsbeispiele der Erfindung wird nachfolgend anhand der Zeichnungen näher erläutert. Die Figuren zeigen im Einzelnen:
- Figur 1:: eine erfindungsgemäße Lenksäule in einer perspektivischen Ansicht;
- Figur 2:: eine perspektivische Ansicht des inneren Mantelrohrs der Lenksäule von Figur 1 ohne äußere Manteleinheit;
- Figur 3:: eine perspektivische Ansicht der Lenksäule von Figur 1 aus einer anderen Blickrichtung im Einbauzustand;
- Figur 4:: wie Figur 3, jedoch im zusammengeschobenen Zustand nach einem Fahrzeugcrash;
- Figur 5:: ein inneres Mantelrohr mit Energieabsorptionsvorrichtung im demontierten Zustand;
- Figur 6:: einen Längsschnitt durch das innere Mantelrohr mit Energieabsorptionsvorrichtung im Normalbetriebszustand;
- Figur 7:: ein Längsschnitt eines Mantelrohrs mit teilweiser Darstellung der äußeren Manteleinheit im ineinander gefahrenen Zustand nach einem Fahrzeugcrash;
- Figur 8:: eine erfindungsgemäße Lenksäule in einer perspektivischen Ansicht in einer zweiten Ausführungsform.

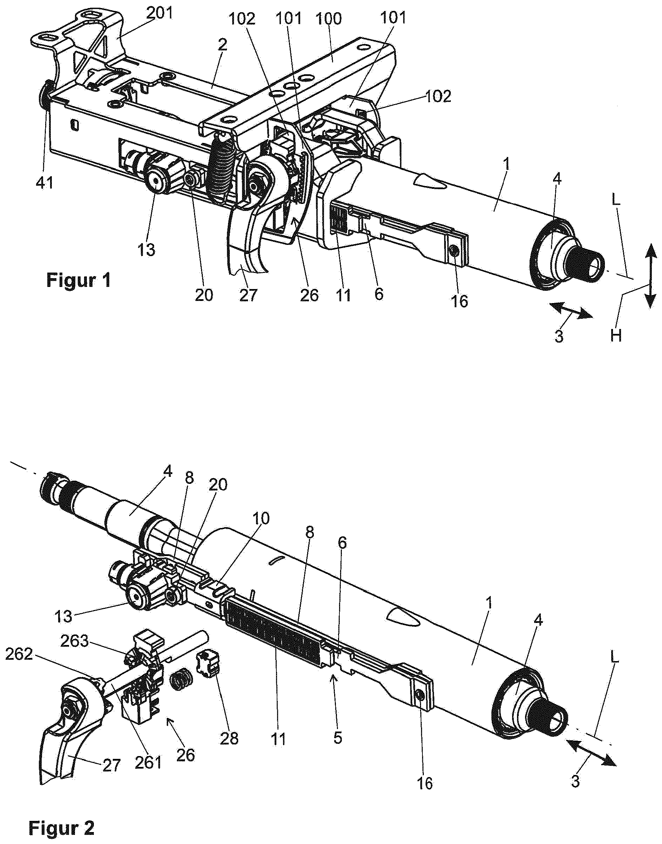

Figur 1 zeigt eine erfindungsgemäße Lenksäule, bei der ein inneres Mantelrohr 1 in einer äußeren Manteleinheit 2 in Axialrichtung 3 verschiebbar aufgenommen ist, so dass die Lenksäule teleskopierbar ist. Eine Lenkwelle 4 ist im Mantelrohr 1 drehbar um eine Längsachse L gelagert. Die Axialrichtung 3 ist parallel zu der Längsachse L, somit ist die Axialrichtung 3 gleichbedeutend mit in Richtung der Längachse L. Die Lenkwelle 4 besteht ebenfalls aus zwei ineinander telekopierbaren Lenkwellenteilen, wobei die Lenkwelle 4 an ihrem vorderen Ende einen Kopplungsabschnitt 41 zur Kopplung mit einer Gabel eines Universalgelenks einer Lenkzwischenwelle. Die äußere Manteleinheit 2 ist durch eine mit einem Fahrzeug verbindbaren hintere Konsole 100 gehalten. Die Konsole 100 umfasst zwei Seitenwangen 101, wobei die Seitenwangen 101 jeweils ein Langloch 102 aufweist, welches sich in einer Richtung orthogonal zur Längsachse L erstreckt. Die äußere Manteleinheit 2 umfasst einen vorderen Halteabschnitt 201, mit dem die Manteleinheit 2 an dem Fahrzeug befestigbar ist. Der Halteabschnitt 201 verformt sich elastisch bei einer Verschwenkung der äußeren Manteleinheit 2 und des inneren Mantelrohrs 1 gegenüber der Konsole 100 zur Darstellung einer Höhenverstellung in Höhenrichtung H.

Wirkungsmäßig zwischen dem Mantelrohr 1 und der Manteleinheit 2 ist eine Energieabsorptionsvorrichtung 5 angeordnet, die einen ersten Deformationsstreifen 6 und einen zweiten Deformationsstreifen 7 aufweist, die auf einer Trägerplatte 8 montiert sind. Die Trägerplatte 8 ist mittels zweier Nietverbindungen 14, 17 am Mantelrohr 1 befestigt. Direkt auf der Trägerplatte 8 ist der zweite Deformationsstreifen 7 angeordnet, der mit denselben Nietverbindungen 14, 17 befestigt ist. Auf dem zweiten Deformationsstreifen 7 ist ein erster Deformationsstreifen 6 angeordnet, der an seinem vorderen Ende mittels einer Nietverbindung 15 direkt an der Trägerplatte 8 befestigt ist, die hierfür eine Kröpfung 18 aufweist. Das hintere Ende des ersten Deformationsstreifens 6 ist mittels einer Nietverbindung 16 am zweiten Deformationsstreifen 7 befestigt.

Der erste Deformationsstreifen 6 ist in seinem Deformationsbereich schmäler als der zweite Deformationsstreifen 7 ausgestaltet. Auf dem ersten Deformationsstreifen 6 sitzt ein erstes Bremselement 9, welches den ersten Deformationsstreifen 6 umgreift und seitlich festklemmt. Das erste Bremselement 9 ist als Deformationsschlitten ausgebildet und umfasst ein Paar bolzenartige abgerundete Vorsprünge 91, die mit dem ersten Deformationsstreifen 6 zusammenwirkt und die Schmalseiten des Deformationsstreifens 6 im Crashfall deformiert. Ein zweites Bremselement 10 ist etwas breiter ausgestaltet und umgreift sowohl den ersten Deformationsstreifen 6 als auch den zweiten Deformationsstreifen 7, klemmt aber nur den zweiten Deformationsstreifen 7 ein, während der erste Deformationsstreifen 6 durch das zweite Bremselement 10 frei hindurchgleiten kann. Das zweite Bremselement 10 ist direkt an einem Ende einer Zahnplatte 11 befestigt, während das erste Bremselement 9 an einer Brücke 19 befestigt ist, die die beiden Bremselemente 9, 10 miteinander verbindet. Die Verbindung zwischen dem ersten Bremselement 9 und der Brücke 19 ist lösbar ausgestaltet. Das zweite Bremselement 10, das als ein Deformationsschlitten ausgebildet ist, wobei das Bremselement 10 ein erstes Paar bolzenartige abgerundete Vorsprünge 111 und ein zweites Paar bolzenartige abgerundete Vorsprünge 112, die mit den Schmalseiten des ersten Deformationsstreifen 6 zusammenwirken und diesen im Crashfall deformieren. Das erste und das zweite Paar Vorsprünge 111, 112 sind zueinander in Richtung der Längsachse L beabstandet.

Ein pyrotechnischer Schalter 13 ist mittels einer Schraube 20 an der Brücke 19 befestigt. Der pyrotechnische Schalter 13 ist zur Schaltung einer Kupplung 12 vorgesehen, die das erste Bremselement 9 mit der Brücke 19 verbindet. Die Kupplung besteht aus einem Bolzen, der in eine Bohrung 21 des ersten Bremselementes 9 hineinragt.

Wenn im Crashfall das Mantelrohr 1 in Axialrichtung 3 gegenüber der Zahnplatte 11 verschoben wird, so nimmt es die Trägerplatte 8 und die beiden Deformationsstreifen 6, 7 mit. Dabei werden die Deformationsstreifen 6, 7 durch die Bremselemente 9, 10 gezogen, wobei das Paar Vorsprünge 91 des ersten Bremselements 9 den ersten Deformationsstreifen 6 verformt und die ersten und zweiten Paar Vorsprünge 111, 112 des zweiten Bremselements 10 den zweiten Deformationsstreifen 7 verformen. Die Deformationsstreifen 6, 7 nehmen dabei die durch die Verschiebung des Mantelrohrs 1 eingeleitete Energie auf.

Soll im Crashfall weniger Energie absorbiert werden, so wird der pyrotechnische Schalter 13 durch eine zentrale Steuerungseinheit des Kraftfahrzeugs betätigt, wobei der Bolzen der Kupplung 12 aus der Bohrung 21 des ersten Bremselements 9 herausgezogen wird. Bewegt sich jetzt der erste Deformationsstreifen 6 in Axialrichtung 3, so bleibt das erste Bremselement 9 in seiner Ausgangsstellung auf dem ersten Deformationsstreifen 6 und wird vom ersten Deformationsstreifen 6 in Axialrichtung 3 mitgenommen. Dadurch gleitet das erste Bremselement 9 nicht über den ersten Deformationsstreifen 6 und es wird die damit verbundene Deformationsenergie nicht absorbiert. Lediglich der zweite Deformationsstreifen 7 wird durch das zweite Bremselement 10 gezogen und deformiert, wobei also insgesamt nur die Deformationsenergie des zweiten Deformationsstreifens 7 absorbiert wird.

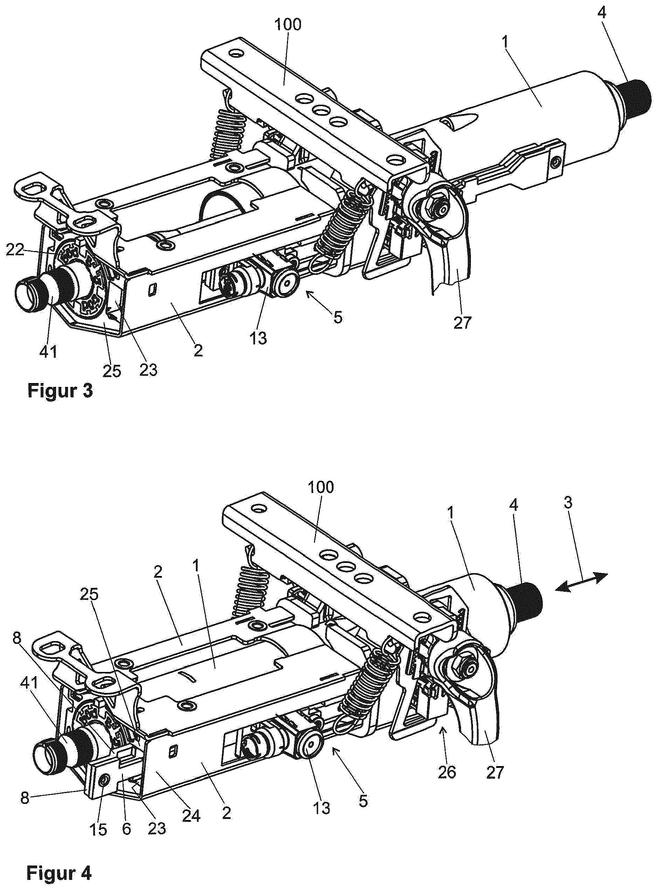

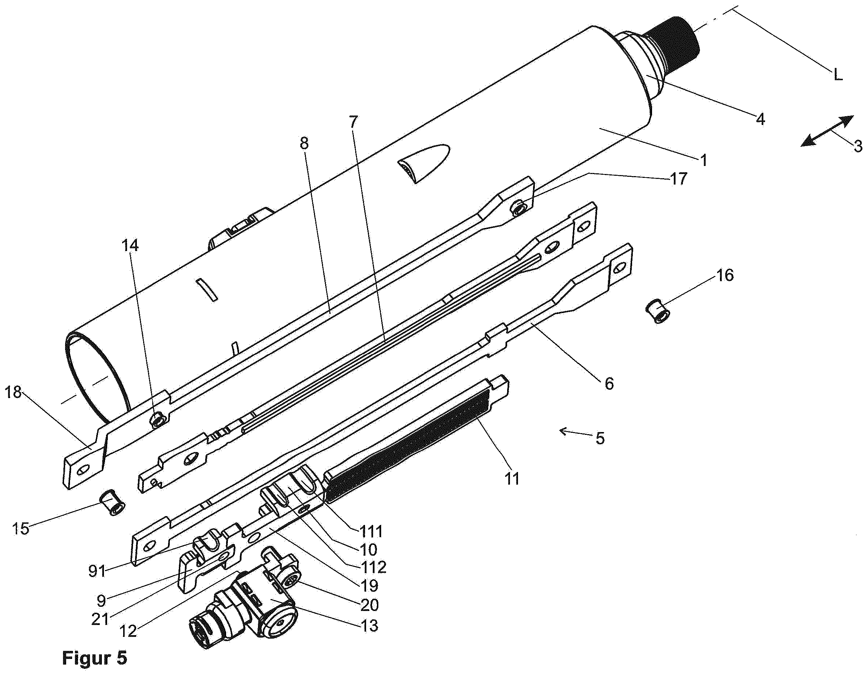

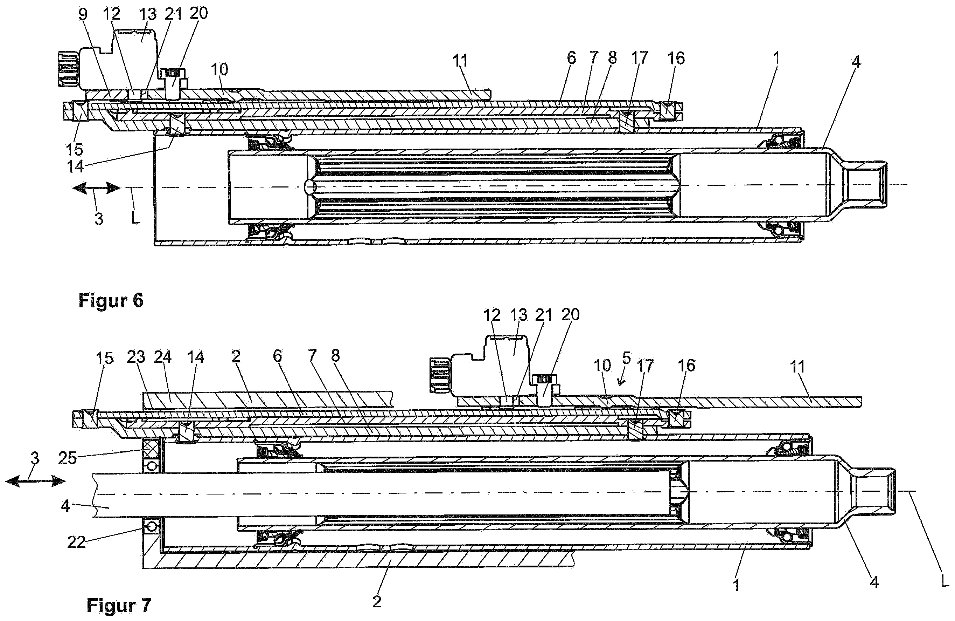

Wie man am besten in den Figuren 6 und 7 erkennt, ragt die Trägerplatte 8 mit dem ersten Deformationsstreifen 6 und im geringeren Maße auch der zweite Deformationsstreifen 7 über das in den Figuren 4 bis 7 gezeigte linke Ende des Mantelrohrs 1 in Axialrichtung 3 hinaus. Durch diese Maßnahme können die Deformationsstreifen 6, 7 länger ausgestaltet sein, als wenn man sie auf der Länge des Mantelrohr 1 unterbringen müsste. Umgekehrt kann das Mantelrohr 1 in Axialrichtung 3 kürzer sein, ohne dass man auch die Deformationsstreifen 6, 7 kürzer machen müsste. Ein längeres Mantelrohr 1 würde eine längere Manteleinheit 2 bedingen, wodurch die Lenksäule insgesamt länger und weniger kompakt wäre und einen höheren Bauraumbedarf aufweist. Durch die erfindungsgemäße Anordnung der Deformationsstreifen 6, 7 auf der Trägerplatte 8, die über das Mantelrohr 1 in axialer Richtung hinausragen, kann die Lenksäule also insgesamt kompakter und in Axialrichtung 3 kürzer gebaut werden.

Im Crashfall verschiebt sich das Mantelrohr 1 innerhalb der Manteleinheit 2 bis zu einem Punkt, wo die Verschiebung enden muss, weil ein Kugellager 22 zur Lagerung der Lenkwelle 4 in der Manteleinheit 2 angeordnet ist. Das Kugellager 22 verhindert ein weiteres Verschieben des Mantelrohr 1 in Axialrichtung 3. Dies kann man am besten in Figur 7 erkennen. Der schematisch dargestellte Längsschnitt durch die Längsachse L in der Figur 7 zeigt die Lenksäule nach dem Crashfall, wobei das innere Mantelrohr 1 vollständig in die äußere Manteleinheit 2 hineinteleskopiert ist.

Das Kugellager 22 stellt jedoch kein Hindernis für den in Axialrichtung 3 über das Mantelrohr 1 hinausragenden Abschnitt der Trägerplatte 8 mit den Deformationsstreifen 6, 7 dar, weil dieser exzentrisch ausgestaltet ist. Der genannte Abschnitt tritt durch eine Öffnung 23, die zwischen einer Wand 24 der Manteleinheit 2 und dem Adapter 25, in dem das als abgedichtetes Kugellagers ausgebildete Lager 22 eingesetzt ist, gebildet ist. Der Adapter 25 ist in die Aufnahmeöffnung der Manteleinheit 2 eingesetzt und fixiert. Aus der Öffnung 23 ragt dann das Ende von Trägerplatte 8 und Deformationsstreifen 6, 7 heraus, wie man in Figur 4 sehen kann. In diesem Bereich außerhalb der Manteleinheit 2 muss lediglich ein ausreichender Radialbereich um die Lenkwelle 4 herum frei bleiben, was aber durch die exzentrische Anordnung von Trägerplatte 8 und Deformationsstreifen 6, 7 gewährleistet ist.

Die Figuren 1 und 2 zeigen, wie die Zahnplatte 11 mit einer an der äußeren Manteleinheit 2 angeordneten Zuspannvorrichtung 26 zusammen wirkt. Die Zuspannvorrichtung umfasst einen Spannbolzen 261, der sich durch eine Öffnung der äußeren Manteleinheit 2 und durch die Langlöcher 102 der Seitenwangen 101 der Konsole 100 ertstreckt. Der Spannbolzen 261 ist drehfest mit dem Bedienhebel 27 und einer Nockenscheibe 262 verbunden. Die Nockenscheibe 262 wirkt mit einer Kulissenscheibe 263 als Hubgetriebe zur Bereitstellung eines Klemmhubs in Richtung der Achse des Spannbolzens 261 zusammen. Die Zuspannvorrichtung 26 ist zwischen einer Freigabestellung und einer Fixierstellung umschaltbar. Ist die Zuspannvorrichtung 26 gelöst, d.h. in Freigabestellung, so kann das Mantelrohr 1 zusammen mit der Zahnplatte 11 in Axialrichtung 3 gegenüber der Manteleinheit 2 frei verschoben werden und die Manteleinheit 2 und das Mantelrohr 1 gegenüber der Konsole 100 verschwenkt werden, um die Position des nicht gezeigten Lenkrads an die Bedürfnisse des Fahrers in Axialrichtung 3 und Höhenrichtung H anzupassen.

Für das Lösen und Zuspannen der Zuspannvorrichtung 26 ist ein Bedienhebel 27 vorgesehen. Im gelösten Zustand der Zuspannvorrichtung 26 ist ein mit einer Verzahnung versehenes Arretierelement 28 außer Eingriff mit der Zahnplatte 11, so dass diese in Axialrichtung 3 leicht verschiebbar ist. Die Zahnplatte 11 umfasst eine Verzahnung mit Zähnen, die mit der Verzahnung des Arretierelements 28 in Eingriff gebracht werden können. Wird die Zuspannvorrichtung 26 zugespannt, so wird das Arretierelement 28 mit seiner Verzahnung gegen die Verzahnung der Zahnplatte 11 gedrückt. Da das Arretierelement 28 in der äußeren Manteleinheit 2 in Axialrichtung 3 unverschiebbar gelagert ist, kann die Zahnplatte 11 im zugespannten Zustand, d.h. in Fixierstellung der Zuspannvorrichtung 26 nicht mehr relativ zur Manteleinheit 2 in Axialrichtung 3 verschoben werden. Die Zahnplatte 11 ist daher starr mit der Manteleinheit 2 verbunden. Treten im Crashfall besonders starke Kräfte in Axialrichtung 3 auf, so kann das Mantelrohr 1 in Axialrichtung 3 bei zugespannter Zuspannvorrichtung 26 nur noch relativ zur unverschieblichen Zahnplatte 11 bewegt werden, wodurch die Deformationsstreifen 6, 7 durch die Bremselemente 9, 10 gezogen werden und dadurch der Axialbewegung des Mantelrohr 1 einen großen Widerstand entgegen setzen. Dabei wird die durch die Bewegung des Mantelrohr 1 eingebrachte Energie in der erfindungsgemäßen Energieabsorptionsvorrichtung 5 absorbiert.

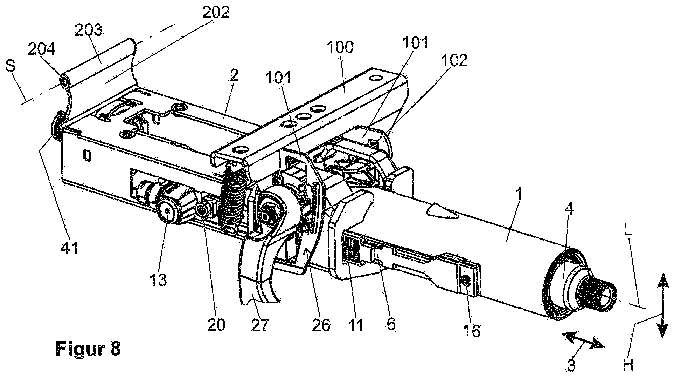

Figur 8 zeigt eine zweite Ausführungsform einer erfindungsgemäße Lenksäule, bei der ein inneres Mantelrohr 1 in einer äußeren Manteleinheit 2 in Axialrichtung 3 verschiebbar aufgenommen ist, so dass die Lenksäule teleskopierbar ist. Eine Lenkwelle 4 ist im Mantelrohr 1 drehbar um eine Längsachse L gelagert. Die Lenkwelle 4 besteht ebenfalls aus zwei ineinander telekopierbaren Lenkwellenteilen. Die äußere Manteleinheit 2 ist durch eine mit einem Fahrzeug verbindbaren hintere Konsole 100 gehalten. Die Konsole 100 umfasst zwei Seitenwangen 101, wobei die Seitenwangen 101 jeweils ein Langloch 102 aufweist, welches sich in einer Richtung orthogonal zur Längsachse L erstreckt. Die äußere Manteleinheit 2 umfasst einen vorderen Halteabschnitt 202, wobei der Halteabschnitt 202 einen Bolzenaufnahmeabschnitt 203 mit einer Bohrung 204 aufweist, wobei sich die Bohrung 204 in einer Richtung orthogonal zur Längsachse L erstreckt. Mittels eines Bolzens, der durch die Bohrung 204 hindurchgeführt wird, kann die Manteleinheit 2 mit dem Kraftfahrzeug verschwenkbar verbunden werden. Somit ist die Manteleinheit 2 um die Achse S der Bohrung 204 verschwenkbar an dem Kraftfahrzeug fixierbar, wobei die Achse S auch als Schwenkachse bezeichnet wird.

Die Erfindung erzielt somit einen verlängerten axialen Verschiebungsweg des Mantelrohrs 1 bei gleichzeitig reduziertem Bauraumbedarf durch eine geringere Länge des Mantelrohrs 1. Dies wird dadurch ermöglicht, dass die Trägerplatte 8 mit den Deformationsstreifen 6, 7 im Crashfall teilweise aus der Manteleinheit 2 herausbewegt werden kann, bevor das Mantelrohr 1 an der vorderen Stirnseite der Manteleinheit 2 anschlägt.

### BEZUGSZEICHENLISTE

- 1: Mantelrohr
- 2: Manteleinheit
- 3: Axialrichtung
- 4: Lenkwelle
- 5: Energieabsorptionsvorrichtung
- 6: erster Deformationsstreifen
- 7: zweiter Deformationsstreifen
- 8: Trägerplatte
- 9: erstes Bremselement
- 10: zweites Bremselement
- 11: Zahnplatte
- 12: Kupplung
- 13: pyrotechnischer Schalter
- 14: Nietverbindung
- 15: Nietverbindung
- 16: Nietverbindung
- 17: Nietverbindung
- 18: Kröpfung
- 19: Brücke
- 20: Schraube
- 21: Bohrung
- 22: Kugellager
- 23: Öffnung
- 24: Wand
- 25: äußerer Rand
- 26: Zuspannvorrichtung
- 27: Bedienhebel
- 28: Arretierelement

## Patentansprüche

1. Lenksäule für ein Kraftfahrzeug, mit einem inneren Mantelrohr (1), das eine Lenkwelle (4) drehbar lagert, und einer äußeren Manteleinheit (2), in der das innere Mantelrohr (1) in Axialrichtung (3) verschiebbar aufgenommen und fixierbar ist, mit einer wirkungsmäßig zwischen dem Mantelrohr (1) und der Manteleinheit (2) angeordneten Energieabsorptionsvorrichtung (5), in der ein Teil der im Crashfall auftretenden Energie absorbierbar ist, wenn das Mantelrohr (1) gegenüber der Manteleinheit (2) teleskopisch verschoben wird, wobei die Energieabsorptionsvorrichtung (5) mindestens einen Deformationsstreifen (6, 7) aufweist, der durch ein Bremselement (9, 10) gezogen und dabei deformiert wird, **dadurch gekennzeichnet, dass** der Deformationsstreifen (6, 7) auf einer Trägerplatte (8) befestigt ist, die ihrerseits am Mantelrohr (1) befestigt ist.

2. Lenksäule nach Anspruch 1, **dadurch gekennzeichnet, dass** die Trägerplatte (8) in Axialrichtung (3) über das Mantelrohr (1) hinausragt.

3. Lenksäule nach Anspruch 2, **dadurch gekennzeichnet, dass** der über das Mantelrohr (1) hinausragende Abschnitt der Trägerplatte (8) mit dem Deformationsstreifen (6, 7) im Crashfall durch eine Öffnung (23) der äußeren Manteleinheit (2) axial hindurchgeht.

4. Lenksäule nach Anspruch 3, **dadurch gekennzeichnet, dass** die Öffnung (23) radial außerhalb eines Lagers (22) für die Lenkwelle (4) angeordnet ist.

5. Lenksäule nach einem der vorhergehenden Ansprüche, **dadurch gekennzeichnet, dass** die Trägerplatte (8) mittels Nietverbindungen (14, 17) am Mantelrohr (1) befestigt ist.

6. Lenksäule nach einem der vorhergehenden Ansprüche, **dadurch gekennzeichnet, dass** an der Trägerplatte (8) zwei Deformationsstreifen (6 ,7) befestigt sind, die mit zwei Bremselementen (9,10) zusammenwirken.

7. Lenksäule nach Anspruch 6, **dadurch gekennzeichnet, dass** die Deformationsstreifen (6, 7) übereinanderliegend angeordnet sind, dass der obenauf liegende erste Deformationsstreifen (6) schmaler ist als der darunterliegende zweite Deformationsstreifen (7), dass der erste Deformationsstreifen (6) von einem engeren ersten Bremselement (9) und der zweite Deformationsstreifen (7) von einem breiteren zweiten Bremselement (10) umgriffen und eingeklemmt ist.

8. Lenksäule nach Anspruch 7, **dadurch gekennzeichnet, dass** die Bremselemente (9, 10) über eine Zahnplatte (11) mit der äußeren Manteleinheit (2) verbunden sind, dass ein mit Zähnen versehenes Arretierelement (28) mit der äußeren Manteleinheit (2) über eine zu Spannvorrichtung (26) verbunden ist, die das Arretierelement (28) gegen die Zahnplatte (11) drückt, um diese im Fahrbetrieb an der Manteleinheit (2) unverrückbar zu fixieren, so dass eine Verschiebung des Mantelrohr (1) gegenüber der Manteleinheit (2) im Crashfall nur unter Betätigung der Energieabsorptionsvorrichtung (5) möglich ist.

9. Lenksäule nach einem der Ansprüche 6 bis 8, **dadurch gekennzeichnet, dass** das erste Bremselement (9) mittels einer lösbaren Kupplung (12) mit dem zweiten Bremselement (10) und der Zahnplatte (11) verbunden ist und dass die Kupplung (12) mittels eines pyrotechnischen Schalters (13) lösbar ist, so dass im Crashfall nur das zweite Bremselement (10) den zweiten Deformationsstreifen (7) verformt.

## Claims

1. A steering column for a motor vehicle, having an inner casing tube (1) which rotatably supports a steering shaft (4), and an outer casing unit (2) in which the inner casing tube (1) is received movably in the axial direction (3) and is fixable, also having an energy absorption device (5) which is arranged functionally between the casing tube (1) and the casing unit (2), in which a portion of the energy occurring in the event of a crash can be absorbed when the casing tube (1) is moved telescopically relative to the casing unit (2), wherein the energy absorption device (5) comprises at least one deformation strip (6, 7), which is pulled by a brake element (9, 10) and thereby deformed, **characterized in that** the deformation strip (6, 7) is fastened on a carrier plate (8), which in turn is fastened to the casing tube (1).

2. The steering column as claimed in claim 1, **characterized in that** the carrier plate (8) projects in the axial direction (3) beyond the casing tube (1).

3. The steering column as claimed in claim 2, **characterized in that** the portion of the carrier plate (8) projecting beyond the casing tube (1) with the deformation strip (6, 7) passes axially through an opening (23) of the outer casing unit (2) in the event of a crash.

4. The steering column as claimed in claim 3, **characterized in that** the opening (23) is arranged radially outside a bearing (22) for the steering shaft (4).

5. The steering column as claimed in one of the preceding claims, **characterized in that** the carrier plate (8) is fastened by means of rivet connections (14, 17) to the casing tube (1).

6. The steering column as claimed in one of the preceding claims, **characterized in that** two deformation strips (6 ,7) are fastened to the carrier plate (8), which interact with two brake elements (9,10).

7. The steering column as claimed in claim 6, **characterized in that** the deformation strips (6, 7) are arranged one on top of the other, the first deformation strip (6) lying on top is narrower than the second deformation strip (7) lying underneath, the first deformation strip (6) is embraced and clamped by a narrower first brake element (9) and the second deformation strip (7) by a broader second brake element (10).

8. The steering column as claimed in claim 7, **characterized in that** the brake elements (9, 10) are joined by a toothed plate (11) to the outer casing unit (2), a locking element (28) provided with teeth is joined to the outer casing unit (2) by a clamping device (26), which presses the locking element (28) against the toothed plate (11) in order to fix it immovably on the casing unit (2) during driving operation, so that a displacement of the casing tube (1) with respect to the casing unit (2) in the event of a crash is only possible by activating the energy absorption device (5).

9. The steering column as claimed in one of claims 6 to 8, **characterized in that** the first brake element (9) is joined by means of a releasable coupling (12) to the second brake element (10) and the toothed plate (11) and the coupling (12) is releasable by means of a pyrotechnical switch (13), so that in the event of a crash only the second brake element (10) deforms the second deformation strip (7).

## Revendications

1. Colonne de direction pour un véhicule automobile, comportant un tube d'enveloppe intérieur (1) qui supporte de manière rotative un arbre de direction (4), et une unité d'enveloppe extérieure (2) dans laquelle le tube d'enveloppe intérieur (1) est reçu de manière déplaçable dans la direction axiale (3) et peut être fixé, comportant un dispositif absorbeur d'énergie (5) disposé fonctionnellement entre le tube d'enveloppe (1) et l'unité d'enveloppe (2), dispositif dans lequel une partie de l'énergie se produisant en cas de collision peut être absorbée, quand le tube d'enveloppe (1) est déplacé de manière télescopique par rapport à l'unité d'enveloppe (2), le dispositif absorbeur d'énergie (5) comprenant au moins une bande de déformation (6, 7) qui est tirée à travers un élément de freinage (9, 10) et est ainsi déformée, **caractérisée en ce que** la bande de déformation (6, 7) est fixée sur une plaque de support (8) qui est pour sa part fixée au tube d'enveloppe (1).

2. Colonne de direction selon la revendication 1, **caractérisée en ce que** la plaque de support (8) dépasse au-delà du tube d'enveloppe (1) dans la direction axiale (3).

3. Colonne de direction selon la revendication 2, **caractérisée en ce que** la partie de la plaque de support (8) dotée de la bande de déformation (6, 7) dépassant au-delà du tube d'enveloppe (1) passe axialement à travers une ouverture (23) de l'unité d'enveloppe extérieure (2) en cas de collision.

4. Colonne de direction selon la revendication 3, **caractérisée en ce que** l'ouverture (23) est disposée radialement à l'extérieur d'un palier (22) pour l'arbre de direction (4).

5. Colonne de direction selon l'une des revendications précédentes, **caractérisée en ce que** la plaque de support (8) est fixée au tube d'enveloppe (1) au moyens de liaisons par rivetage (14, 17).

6. Colonne de direction selon l'une des revendications précédentes, **caractérisée en ce que** deux bandes de déformation (6, 7) sont fixées à la plaque de support (8), lesquelles bandes coopèrent avec deux éléments de freinage (9, 10).

7. Colonne de direction selon la revendication 6, **caractérisée en ce que** les bandes de déformation (6, 7) sont superposées, **en ce que** la première bande de déformation (6) située au-dessus est plus étroite que la deuxième bande de déformation (7) située en dessous, **en ce que** la première bande de déformation (6) est entourée et serrée par un premier élément de freinage (9) plus resserré et la deuxième bande de déformation (7) est entourée et serrée par un deuxième élément de freinage (10) plus large.

8. Colonne de direction selon la revendication 7, **caractérisée en ce que** les éléments de freinage (9, 10) sont reliés à l'unité d'enveloppe extérieure (2) par le biais d'une plaque dentée (11), **en ce qu'**un élément d'arrêt (28) pourvu de dents est relié à l'unité d'enveloppe extérieure (2) par le biais d'un dispositif de serrage (26) qui presse l'élément d'arrêt (28) contre la plaque dentée (11), afin de fixer celle-ci à l'unité d'enveloppe (2) de manière immobile en mode de conduite, de sorte qu'un déplacement du tube d'enveloppe (1) par rapport à l'unité d'enveloppe (2) en cas de collision ne soit possible que par actionnement du dispositif absorbeur d'énergie (5).

9. Colonne de direction selon l'une des revendications 6 à 8, **caractérisée en ce que** le premier élément de freinage (9) est relié au deuxième élément de freinage (10) et à la plaque dentée (11) au moyen d'un accouplement libérable (12) et **en ce que** l'accouplement (12) peut être libéré au moyen d'un commutateur pyrotechnique (13), de sorte qu'en cas de collision, seulement le deuxième élément de freinage (10) déforme la deuxième bande de déformation (7).
